Europäisches Patentamt

European Patent Office

Office européen des brevets

(11) Publication number: **0 194 049**
A2

# (12) EUROPEAN PATENT APPLICATION

(21) Application number: **86300891.8**

(51) Int. Cl.⁴: **B 60 N 1/08**

(22) Date of filing: **10.02.86**

(30) Priority: **08.03.85 US 709881**

(43) Date of publication of application: **10.09.86**
Bulletin 86/37

(84) Designated Contracting States: **DE GB**

(71) Applicant: **GENERAL MOTORS CORPORATION,**
**General Motors Building 3044 West Grand Boulevard,**
**Detroit Michigan 48202 (US)**

(72) Inventor: **Rees, Richard William Arthur, 18609 Yonge**
**Street, Holland Landing Ontario LOG1HO (CA)**

(74) Representative: **Denton, Michael John et al, Patent**
**Section - Luton Office (F6) Vauxhall Motors Limited P.O.**
**Box 3 Kimpton Road, Luton Bedfordshire LU2 0SY (GB)**

(54) **Seat slide structures and bearing assembly units therefor.**

(57) A bearing assembly unit (30) for a seat slide structure (10) includes, in one embodiment, a plastic cage (32) which is preassembled with a flexible elongate member (46) which can be bowed intermediate thereof to support the track members (12, 14) of the seat slide structure, with such track members being spaced by uncaged balls (56).

MJD/1772

## SEAT SLIDE STRUCTURES AND BEARING
## ASSEMBLY UNITS THEREFOR

This invention relates generally to seat slide structures and to bearing assembly units therefor and more particularly to bearing assembly units of the type including a bowed flexible elongate member rotatably supporting one track member of the seat slide structure on the other track member.

The bearing assembly unit of this invention is particularly intended for use with seat slide structures which include upper and lower generally U-shaped track members having base walls, side walls and terminal flanges located in respective opposed relationship to each other. Seat slide structures of this type, and bearing assembly units therefor, are well known - see, for example, US patent Nos. 2,970,015 and 4,375,905. The bearing assembly unit shown in US patent No.2,970,015 includes a pair of caged balls and a centrally positioned roller bearing.

The bearing assembly unit of this invention is an improvement over these known bearing assembly units and over that shown in US Patent No.4,511,187 which was published after the priority date of this application.

The latter structure includes a flexible elongate member having a centre axle portion and roller end portions which is located between the upper track member and the lower track member. The centre axle portion of the elongate member is bowed by a longitudinal rib of the upper track member to engage the roller end portions with terminal flanges of the lower track member and the base wall of the upper track member. Balls are provided between the terminal flanges of the upper and lower track members to vertically locate the track members with respect to each other. The elongate member and the balls are located with respect to each other and the track members by a cage.

A seat slide structure, and a bearing assembly unit therefor, in accordance with the present invention is characterised by the features specified in the characterising portion of Claims 1 & 2 respectively.

The seat slide structure of this invention includes front and rear bearing assembly units, each comprising a caged flexible elongate member and uncaged balls for adjustably supporting the upper track member on the lower track member. The cage is of plastic material and locates the elongate member transversely of the track members while the balls are permitted to move independently of the caged elongate member between the terminal flanges of the upper and lower track members. The movement of the elongate member of a unit is controlled by transversely aligned pairs of spaced integral arcuate stops in the terminal flanges of the lower track member. Each pair of stops is engaged by the roller end portions of the elongate member to limit the extent of linear movement of the caged member as the track members are adjusted. The extent of linear movement of the balls of the unit is controlled by engagement of the balls between integral stops in the side walls of the upper and lower track members. The engagement of the balls with the stops sets the extent of forward and rearward adjustment of the track members.

The primary feature of this invention is that it provides an improved bearing assembly unit for seat slide structures which comprises front and rear units, each including a caged flexible elongate member and uncaged balls, for adjustably supporting an upper track member on a lower track member. Another feature is that the elongate member and the balls of each unit are limited in their extent of linear movement by integral stops incorporated in the track members. A further feature is that the cage for the elongate member is of plastic material and the extent of movement of the member is controlled by engagement of the member with integral stops of the lower track member. Yet another feature is that the balls are controlled in their extent of linear movement by engagement between integral stops of the upper and lower track members.

This invention is further described, by way of example, with reference to the accompanying drawings wherein:

Figure 1 is a side elevational view of a seat slide structure incorporating a bearing assembly unit according to this invention;

Figure 2 is a top plan view of the seat slide structure;

Figure 3 is an enlarged sectional view taken along line 3-3 of Figure 1;

Figure 4 is an enlarged sectional view taken along line 4-4 of Figure 2;

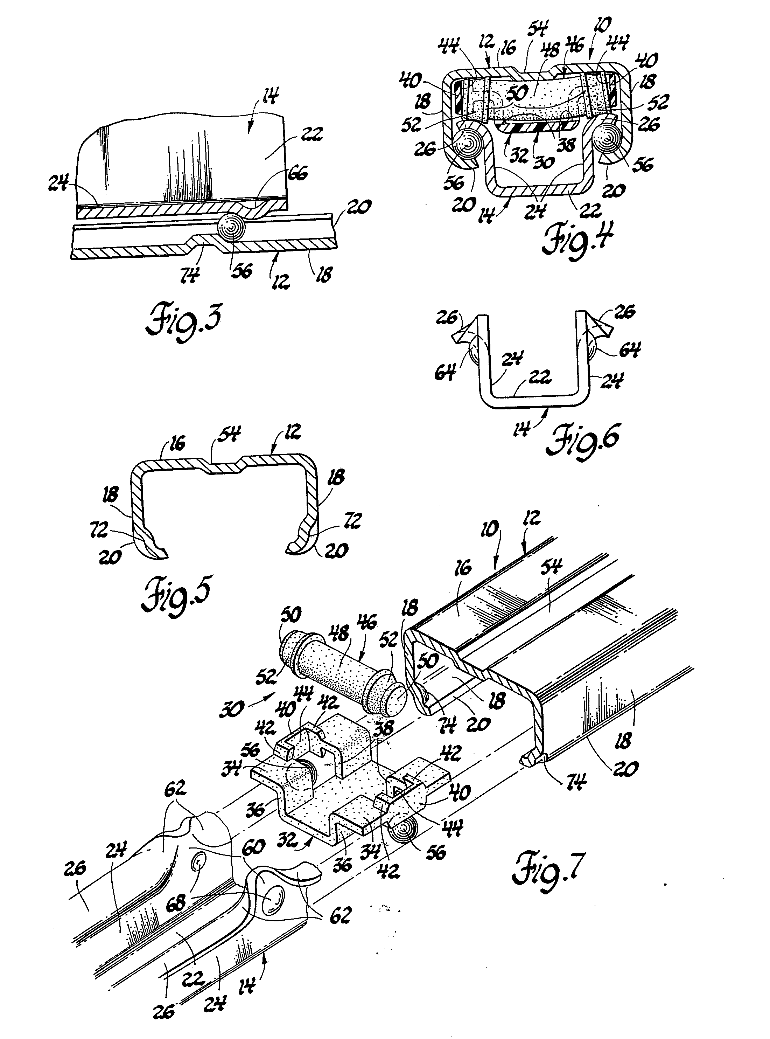

Figure 5 is an enlarged sectional view taken along line 5-5 of Figure 2;

Figure 6 is an enlarged view taken along line 6-6 of Figure 2; and

Figure 7 is an exploded perspective view.

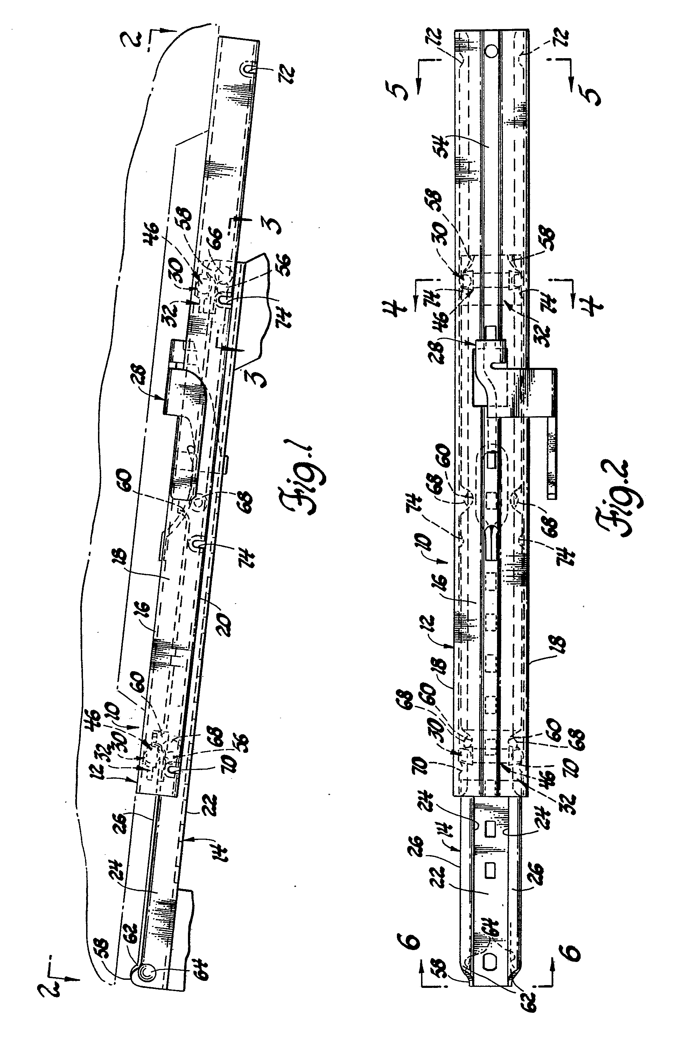

Referring now particularly to Figures 1 and 2 of the drawings, a seat slide structure 10 includes an upper track member 12 and a lower track member 14, both of which are of generally U-shape configuration. As best shown in Figures 4 and 7, the upper track member 12 includes a base wall 16, a pair of side walls 18 and a pair of terminal flanges 20 which are arcuate. The lower track member 14 includes a base wall 22 which is juxtaposed to wall 16, a pair of side walls 24, each of which is juxtaposed to a respective side wall 18, and a pair of terminal flanges 26, each of which is arcuate and juxtaposed to a respective terminal flange 20.

The upper and lower track members 12,14 are releasably latched in any one of a series of horizontally adjusted positions by a latch structure 28 which is disclosed and claimed in our copending application No.          (MJD/1773) filed the same day as this application. While a particular latch structure 28 is shown, it should be noted that the bearing assembly of this invention can be used with any other latch structures.

The upper track member 12 is adjustably supported on the lower track member 14 by front and rear bearing assembly units 30, each of which comprises a caged flexible elongate roller member and independently movable uncaged balls. Both bearing assembly units 30 are structurally alike and the rear unit will now be described.

As best shown in Figure 7, a generally U-shaped cage 32 of plastic material includes flanges 34 extending oppositely and laterally to the side walls 36 thereof. The side walls 36 and the flanges 34 have slots 38. The slots 38 in the flanges 34 are closed by integral end walls 40 which are additionally joined to the flanges 34 by arcuate walls 42. Integral end wall 40 and arcuate wall 42 and slots 38 define snap-in pockets 44.

A bearing roller 46 which is flexible, elongate, cylindrical, and of plastic material includes a centre axle portion 48 and roller end portions 50 which are tapered, and each of which is provided with a peripheral groove 52 of arcuate cross-section. The roller end portions 50 snap into the snap-in pockets 44 of the U-shaped cage 32 so that the bearing roller 46 and the U-shaped cage can be preassembled as a separate unit. The snap-in pockets 44 are larger than the roller end portions 50 but the upper and lower openings thereof are restricted so that the roller end portions 50 are loosely received within the snap-in pockets.

As shown in Figure 4, the U-shaped cage 32 and bearing roller 46 fit between the base wall 16 of the upper track member 12 and the terminal flanges 26 of the lower track member 14. The engagement of an elongate rib 54 in the base wall 16 of the upper track member 12 bows the centre axle portion 48 of the bearing roller 46 so that the roller end portions 50 rotatably engage the inner surface of the base wall 16 and the peripheral grooves 52 rotatably engage the terminal flanges 26 of the lower track member 14 to thereby support the upper track member 12 on the lower track member 14. The upper and lower track members 12,14 are vertically spaced with respect to each other

0194049

by uncaged bearing means in the form of unchanged balls 56 which are part of the bearing assembly unit and which fit between and engage the pairs of terminal flanges 20 and 26 under the vertical bias of the bowed bearing roller 46.

The extent of movement of the U-shaped cage 32 and bearing roller 46 of each of the front and rear bearing assembly units 30 is controlled by transversely aligned pairs of spaced integral stops 58 and 60 of the lower track member 14. As shown in Figure 7, the spaced integral stops 60 are provided by embossing or forming portions of the terminal flanges 26 of the lower track member 14 generally into alignment with the side walls 24, with such spaced integral stops including arcuate shoulders 62. The spaced integral stops 58 are formed in the same manner as the spaced integral stops 60 and have the same arcuate shoulders 62. As the upper and lower track members 12,14 move relative to each other the U-shaped cage 32 and bearing roller 46 of each bearing assembly unit is free to move independently of each track member. The extent of linear movement is controlled by engagement of the roller end portions 50 with the arcuate shoulders 62 of the spaced integral stops 58 or 60.

When the upper track member 12 is in its rearward position as shown in Figure 1, the roller end portions 50 of the bearing rollers 46 of the front and rear bearing assembly units 30 normally engage the arcuate shoulders 62 of spaced integral stops 60 and 58. When the upper track member 12 is in its full forward position, not shown, the roller end portions 50 of the bearing rollers 46 of the front and rear bearing assembly units 30 would engage the arcuate shoulders 62 of the spaced integral stops 58 and 60 respectively.

The uncaged balls 56 of the front and rear bearing assembly units 30 are free to move independently of each other and of the bearing rollers 46 of such bearing assembly units between the terminal flanges 20 and 26 of the upper and lower track members 12,14. In order to control the extent of linear movement of these uncaged balls 56 and of the upper track member 12, the lower track member 14 is provided with outwardly embossed pairs of shoulders or abutments 64 and 66 adjacent the forward and rearward ends thereof and abutments 68 intermediate thereof. The upper track member 12 includes embossed pairs of shoulders or abutments 70 and 72 adjacent the forward and rearward ends thereof and like pairs of abutments 74 intermediate thereof.

As shown in Figure 1, the extent of rearward movement of the upper track member 12 relative to the lower track member 14 is limited by engagement of the uncaged balls 56 of the front bearing assembly unit 30 with the abutments 68 of the lower track member concurrently with engagement of the abutment 70 of the upper track member with such uncaged balls. Likewise, the uncaged balls 56 of the rear bearing assembly unit 30 engage the abutments 66 of the lower track member 14 concurrently with engagement of the abutments 74 of the upper track member 12 with such uncaged balls.

The extent of forward movement of the upper track member 12 relative to the lower track member 14 would be limited by engagement of the uncaged balls 56 of the front bearing assembly unit 30 with abutments 64 and concurrent engagement of the abutments 74 with such uncaged balls, and the engagement of the uncaged balls 56 of the rear bearing assembly unit 30 with abutments 68 of the lower track member and the concurrent engagement of abutments 72 of the upper track member with such uncaged balls.

Thus this invention provides an improved bearing assembly unit for seat slide structures.

Claims:

1. A seat slide structure (10) comprising, a pair of generally U-shaped track members, one track member (12) including a base wall (16), a pair of side walls (18) and a terminal flange (20) extending from each of the side walls, the other track member (14) including a base wall (22) opposed to the one base wall, a pair of side walls (24), each located in opposed spaced relationship to a respective side wall of the one track member, and a terminal flange (26) extending from each of the side walls and located in opposed spaced paired relationship to a respective terminal flange of the one track member, and a pair of bearing assembly units (30), characterised in that each bearing assembly unit comprises an uncaged bearing means (56) located between the opposed paired terminal flanges, and a bearing roller (46) which is flexible, elongate, and cylindrical and which is located transversely of the track members between the base wall (16) of the one track member and the terminal flanges (26) of the other track member, said bearing roller including roller end portions (50) rotatably engageable with the terminal flanges (26) of the other track member and with the base wall (16) of the one track member to bias the track members apart relative to each other and to engage the uncaged bearing means with the opposed paired terminal flanges (20,26), each terminal flange (26) of the other track member including a spaced pair of arcuate shoulders (62) formed integrally therewith and defining the extent of rolling movement of the bearing roller relative to the other track member, each side wall (24) of the other

0194049

track member being provided with a spaced pair of abutments (64,66,68) formed integrally therewith and defining the extent of movement of the uncaged bearing means relative to the one track member (12) whereby both the uncaged bearing means and the bearing rollers have predefined extents of movement relative to the one and the other track members.

2. A bearing assembly unit (30) for a seat slide structure (10) comprising a pair of generally U-shaped track members, one track member (12) including a base wall (16), a pair of side walls (18) and a terminal flange (20) extending from each of the side walls, the other track member (14) including a base wall (22) opposed to the one base wall, a pair of side walls (24), each located in opposed spaced relationship to a respective side wall of the one track member, and a terminal flange (26) extending from each of the side walls and located in opposed spaced paired relationship to a respective terminal flange of the one track member, the bearing assembly unit being characterised by uncaged bearing means (56) locatable between the opposed paired terminal flanges, and a bearing roller (46) which is flexible, elongate, and cylindrical, and which is locatable transversely of the track members between the base wall of the one track member and the terminal flanges of the other track member, said bearing roller including roller end portions (50) rotatably engageable with the terminal flanges of the other track member and with the base wall of the one track member to bias the track members apart relative to each other and to engage the bearing means with the opposed paired terminal flanges.

0194049

Fig.1

Fig.2

0194049

Fig.3

Fig.4

Fig.5

Fig.6

Fig.7